# EUROPEAN PATENT APPLICATION

(11) **EP 1 841 184 A1**
(43) Date of publication of application: **03.10.2007**
(21) Application number: 06006440.9
(22) Date of filing: 28.03.2006
(51) Int. Cl.: H04L 29/12, H04L 29/06

(54) **Efficient IP address configuration in mobile networks with multiple mobility anchor points (MAPs)**

(71) Applicant: MATSUSHITA ELECTRIC INDUSTRIAL CO., LTD., Osaka 571-8501 (JP)
(72) Inventor: Velev, Genadi, 63225 Langen (DE); Hakenberg, Rolf, 63225 Langen (DE)
(74) Representative: Grünecker, Kinkeldey, Stockmair & Schwanhäusser Anwaltssozietät

(57) **Abstract**

The invention relates to a method for configuring a global network-layer address of a mobile node in a network with multiple network access entities. The MN attaches to the network and utilizes a link-local address for communicating with the network. The MN is connected to a router, which is connected to the multiple network access entities and includes a list, comprising prefix and performance information on each network access entity. To expedite the address configuration of the MN, the router is enabled to generate a global network-layer address configuration message for the MN without prior reception of a router solicitation message from the MN. Furthermore, said configured address is based on the most preferable network access entity in the network, by providing said updated list and selecting the best network access entity. Further, the invention relates to a router, network access entity and system implementing the respective methods.

## Description

### FIELD OF THE INVENTION

The invention relates to IP-address configuration for a mobile node in a mobile network with multiple mobility anchor points. The invention provides a method for configuring a network-layer address of a mobile node. The invention also relates to a router for exchanging data with a mobile node. The invention further relates to a network access entity for routing data into a network.

### TECHNICAL BACKGROUND

A new version, IPv6 of the Internet Protocol is currently being designed, though the previous Internet Protocol version 4, IPv4, provides a reliable and secure way to connect computers all over the world. The primary aim of IPv6 is to provide sufficient address space, therefore a 128-bit technology is being implemented for addressing. Furthermore, the design of a new version was seen as an opportunity to overcome some of the other shortfalls of IPv4. For instance, IPv4 was not initially designed with support for mobile users, because mobility was not an issue at the beginning of the Internet. However, in IPv6 mobility was designed into the protocol from the beginning, thereby providing a better support and integration with the underlying mechanisms.

Consequently, Mobile IPv6 includes the protocols and mechanisms used for allowing an IPv6 node to be mobile, namely to move to different networks all over the world, while maintaining upper layer connectivity. The key benefit of Mobile IPv6 is that even though the mobile node (MN) changes locations and addresses, the existing connections through which the mobile node is communicating are maintained. In other words, MIPv6 allows a mobile node to maintain the same address, regardless of its point of attachment to the Internet, in order to maintain existing connections, while remaining reachable at any new location of the Internet.

To accomplish this, connections to mobile nodes are made with a specific home address, that is permanently assigned to the mobile node and through which the mobile node is always reachable. Furthermore, a foreign network dependent address is additionally assigned to the mobile node at each new location. By binding this two different addresses at an entity, a home agent, in the home network, it is possible to efficiently route data to the mobile node via the binding entity in the home network, if the mobile node is not in its home network. More specifically, each MN has configured a home IP address (HoA), which is used to identify itself, independent of the location in the Internet. The MN also configures a care-of-address (CoA), which is topologically related to the location of the MN. Whenever a MN performs a handover, a new CoA is configured and announced to the home agent (HA) and optionally to the correspondent node (CN).

In a usual mobile communication system, the mobile nodes are connected to the network infrastructure via a wireless connection. Due to the physical movement, an IP node may loose the connection to a current access router and establish a new connection to another access routers (AR). The change of the serving AR means that a new IP address needs to be configured for the interface performing the handover, because the new AR would advertise a different IP prefix.

It has been identified that the handover latency using MIPv6 is unacceptable, when real-time applications are used. The handover latency can be mainly divided into two parts. First, a latency for configuring the new IP address and second, a latency for registering the new address at the HA and/or CN.

The latter issue is addressed by optimizations to the MIPv6 protocol, like hierarchical MIPv6 (HMIPv6), which keeps the registration-related signalling in the local domain. Despite the improvements by HMIPv6, the issue of new IP address configuration remains still open. Another approach for achieving mobility could be to enable the MN to keep its IP address while moving among different ARs. This could be achieved if the ARs within a pre-defined domain advertise the same IP prefixes. This approach is called network-based localized mobility management (NETLMM).

In NETLMM, there is a network gateway responsible for the MN mobility (Mobility Anchor Point, MAP), at which all MNs are registered with their current location, i.e. the AR where they currently reside. The data packets to and from the MNs are tunneled between the MAP and ARs. When a MN moves from old AR to a new AR, the MAP is notified about the location change and starts tunneling the MN's data packets to the new location, which is the new AR.

The basic NETLMM architecture assumes one MAP per NETLMM domain. If the area covered by the NETLMM is large, it is however also possible to introduce additional several MAPs in order to perform traffic separation and load balancing. Each AR in the domain can communicate to all MAPs and may establish a tunnel to each MAP individually. It may be assumed, that a different IP address prefix is assigned to each MAP. The existence of several IP prefixes does not interfere with the routing within the NETLMM domain, because the data between MAPs and ARs is tunnelled. The reason for using a separate IP prefix per MAP is that the data packets coming from outside the NETLMM domain are routed to the correct MAP, at which a given MN is attached.

Assuming the scenario of multiple MAPs, each having a separate prefix, the AR needs to perform discovery of the optimal MAP first, which may be done for example based on the current load conditions, before the AR advertises the IP prefix to the MN. This results in several problems. First, the AR needs to advertise different IP prefixes to the distinct MNs. Otherwise, if the AR would advertise all MAPs' prefixes to all MNs, the MNs would configure IP addresses based on each MAPs' prefix. Second, the delay for IP address configuration is increased, because the MN needs to wait longer until it receives a router advertisement (RA) by the AR. This is because the AR needs to discover the most appropriate MAP each time a new MN attaches to the network. Third, the signalling amount between AR and MAP is increased, since the AR initiates a special signalling to discover the most appropriate MAP, after it receives a router solicitation (RS) by the MN.

### SUMMARY OF THE INVENTION

In the light of the above mentioned problems, the object of the invention is to provide an efficient configuration method of a global network-layer address for a mobile node.

The objects are solved by the subject matter of the independent claims. Advantageous embodiments of the invention are subject-matters of the dependent claims.

One main aspect of the invention is to decrease the delay for global network-layer address configuration for a mobile node, by generating in the AR a configuration message, containing global network-layer address information for the mobile node without prior reception of a router solicitation message from the MN.

A further aspect of the invention is to configure the global network-layer address based on the most preferable network access entity in the network, by providing a network access entity list in the router and selecting the best network access entity, upon receiving a uniqueness request message for link-local address from the MN.

According to the invention, a method for configuring a global network-layer address of a mobile node is provided. The mobile node attaches to a network and utilizes a link-local address for communicating with the network. Furthermore, the mobile node is connected to a router in the network, which is connected to a plurality of network access entities. In addition, the router includes a network access entity list, comprising prefix address information and performance information on each of the plurality of network access entities. Upon generating the link-local address, the mobile node transmits a first uniqueness request notification into the network, for examining the uniqueness within the network of the link-local address of the mobile node. After receiving the first uniqueness request notification in the router, one network access entity is selected from the network access entity list. The performance information of the selected network access entity indicates the highest performance of all the network access entities of the network access entity list. Subsequently, the global network-layer address of the mobile node is configured, by utilizing the prefix address information of the selected network access router.

In a further advantageous embodiment of the invention, upon receiving the first uniqueness request notification in the router, the uniqueness of the link-local address is examined in the router. In case the link-local address is unique in the router, the router transmits a second uniqueness request notification to each of the plurality of network access entities, comprising identification information of the mobile node and the link-local address of the mobile node. In case the link-local address is not unique in the router, the router transmits a first uniqueness denial notification to the mobile node, comprising uniqueness information on the examined link-local address of the mobile node. Upon receiving the uniqueness denial notification from the router, a second link-local address is generated for the mobile node. A possible advantage may be that the router is able to determine in good time if the generated link-local address is unique.

According to an advantageous embodiment, upon receiving the second uniqueness request notification in each network access entity, the uniqueness of the link-local address of the mobile node is examined in each network access entity. In case the link-local address of the mobile node is unique in each network access entity, each network access entity transmits a first uniqueness statement notification to the router, comprising uniqueness information of the examined link-local address of the mobile node and comprising prefix address information and performance information of the transmitting network access entity. Furthermore, a registration database of mobile nodes is updated in each network access entity, by configuring an entry for the mobile node in the registration database, utilizing the identification information and link-local address of the mobile node in the second uniqueness request notification. In case the link-local address of the mobile node is not unique in each network access entity, each network access entity transmits a second uniqueness denial notification to the router, comprising uniqueness information on the examined link-local address of the mobile node. Thereby, each reachable network access entity in the network, is efficiently provided with the necessary information to examine the uniqueness of the Link-local address.

In an addition to previous embodiments, upon updating the registration database of mobile nodes, a lifetime sequence is initiated in each network access entity for the entry for the mobile node in the registration database. Upon terminating the lifetime sequence the entry for the mobile node is deleted. Thereby, eventually the mobile node is only registered in one network access entity.

In a further embodiment upon receiving in the router the first uniqueness statement notification from each network access entity, the network access entity list is updated, utilizing the prefix address information and performance information of the first uniqueness statement notification from each network access entity. Thereby, it is achieved to continuously update the network access entity list and consequently always have it up to date.

According to an advantageous embodiment of the invention, the selection of the one network access entity from the network access entity list is performed upon receiving the first uniqueness request notification in the router. The advantage may be that the network-layer address configuration is expedited.

According to an alternative embodiment of the invention, the selection of the one network access entity from the network access entity list is performed upon updating the network access entity list. Thereby, really the best network access entity is selected, as the network access list was just updated before selection.

In an addition to previous embodiments, upon selecting the one network access entity, a global network-layer address configuration message is transmitted to the mobile node, comprising prefix address information of the selected network access entity. The configuration of the global network-layer address of the mobile node is conducted upon receiving the global network-layer address configuration message. The mobile node is efficiently provided with the necessary prefix address information for further IP address configuration.

According to a further embodiment, the global network-layer address configuration message is a unicast router advertisement message. Thereby, an implementation in IPv6 networks is facilitated.

In an additional embodiment of the invention, upon configuring the global network-layer address, a third uniqueness request notification is transmitted into the network, for examining the uniqueness within the network of the configured global network-layer address of the mobile node. By examining the uniqueness of the global network-layer address of the mobile node, the routing for said address is always directed to the correct MN.

In an addition to previous embodiments, the first uniqueness request notification is a Neighbour Solicitation message being sent upon initiating a duplicate address detection procedure for the link-local address of the mobile node. One possible advantage thereof is, that a already available uniqueness verification procedure like DAD may be utilized, without implementing a novel procedure in this respect.

In a similar embodiment, the third uniqueness request notification is a Neighbour Solicitation message being sent upon initiating a duplicate address detection procedure for the global network-layer address of the mobile node. One possible advantage thereof is, that an already available uniqueness verification procedure like DAD may be utilized, without implementing a novel procedure in this respect.

According to an advantageous embodiment of the invention, upon receiving the third uniqueness request notification in the router, the uniqueness of the global network-layer address is examined in the router. In case the global network-layer address is unique in the router, the router transmits a fourth uniqueness request notification to the selected network access entity, comprising identification information of the mobile node and the global network-layer address of the mobile node. In case global network-layer address is not unique in the router, the router transmits a third uniqueness denial notification to the mobile node, comprising uniqueness information on the examined global network-layer address of the mobile node. Upon receiving the third uniqueness denial notification from the router, a second global network-layer address is configured for the mobile node. Thereby the non-uniqueness of the global network-layer address may be determined early.

In an addition to previous embodiments, upon receiving the fourth uniqueness request notification in the selected network access entity, the uniqueness of the global network-layer address of the mobile node is examined in the selected network access entity. In case the global network-layer address of the mobile node is unique in the selected network access entity, the lifetime sequence is terminated for the entry for the mobile node in the registration database for mobile nodes. Furthermore, the entry for the mobile node in the registration database for mobile nodes is updated, thereby utilizing the identification information and the global network-layer address of the mobile node. In addition, the selected network access entity transmits a second uniqueness statement notification to the router, comprising uniqueness information of the examined global network-layer address of the mobile node. In case the global network-layer address of the mobile node is not unique in the selected network access entity, the selected network access entity transmits a fourth uniqueness denial notification to the router, comprising uniqueness information of the examined global network-layer address of the mobile node. An advantage may be that the AR receives the necessary information from the network access entities of the network to decide whether said address is unique.

According to an advantageous embodiment of the invention, the performance information of each network access entity is an indicator for the ability of a network access entity to serve a mobile node, comprising information on a load and a mobile node serving capability of the network access entity. The performance information is easy to derive from the network access entity.

According to the invention, a router for exchanging data with a mobile node within a network is provided. The mobile node attaches to the network and utilizes a link-local address for communicating with the network. The router is connected to a plurality of network access entities. The router includes a network access entity list, comprising prefix address information and performance information on each of the plurality of network access entities. A receiver in the router is adapted to receive a uniqueness statement message from each network access entity, comprising uniqueness information of the link-local address of the mobile node and comprising prefix address information and performance information of the transmitting network access entity. A processor in the router is adapted to process the uniqueness statement message and to update the network access entity list, utilizing the prefix address information and performance information of the uniqueness statement notification from each network access entity.

According to the invention, a network access entity for routing data into a network is provided. The network access entity is connected to a router, wherein the mobile node attaches to the network and utilizes a link-local address for communicating with the network. The router is connected to the mobile node and the network access entity comprises a receiver adapted to receive a first uniqueness request notification from the router, comprising identification information of the mobile node and the link-local address of the mobile node. A processor in the network access entity is further adapted to process the uniqueness request notification and adapted to examine in the network access entity the uniqueness of the link-local address of the mobile node. Furthermore, the processor is adapted to generate a uniqueness statement notification for the router, comprising uniqueness information of the examined link-local address of the mobile node and comprising prefix address information and performance information of the network access entity. A transmitter in the network access entity is adapted to transmit the uniqueness statement notification to the router.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows a mobile communication system according to one embodiment of the invention, including several MAPs in a network,
- **Fig. 2**: shows a signalling diagram for configuring the global IP address of a mobile node according to one embodiment of the invention,
- **Fig. 3**: shows a signalling diagram for configuring the global IP address of a mobile node according to another embodiment of the invention,
- **Fig. 4**: shows a packet format of a router advertisement message according to one embodiment of the invention,
- **Fig. 5**: shows a packet format of a neighbour solicitation message according to one embodiment of the invention,
- **Fig, 6**: shows a logical flow chart for configuring the global IP address of a mobile node according to one embodiment of the invention,
- **Fig. 7**: shows a general format of a link-local address, and
- **Fig. 8**: shows a general format of a global unicast network-layer address.

### DETAILED DESCRIPTION OF THE INVENTION

The following paragraphs will describe various embodiments of the invention. For exemplary purposes only, most of the embodiments are outlined in relation to an IPv6 communication system and the terminology used in the subsequent sections mainly relates to the IPv6 terminology. However, the terminology and the description of the embodiments with respect to an IPv6 architecture is not intended to limit the principles and ideas of the inventions to such systems.

Also the detailed explanations given in the Technical Background section above are merely intended to better understand the mostly IPv6 specific exemplary embodiments described in the following and should not be understood as limiting the invention to the described specific implementations of processes and functions in the mobile communication network.

According to the invention, a global network-layer address may be defined as a global unicast IP address identifying a single interface. Packets sent to such address are delivered to the interface identified by this address. Accordingly, the global network-layer address is needed for starting a communication with a corresponding node outside the local single subnet (link). Whenever the mobile node configures a global unicast IP address for an interface, e. g. at power on, the MN must check the uniqueness of this address within the network.

According to the invention, a link-local address may be defined as a unicast IP address, which is used on a single subnet (link) and identifies an interface. Link-Local addresses are designed to be used for addressing on a single subnet for purposes such as automatic address configuration, neighbor discovery, or when no routers are present.

According to the invention, an attachment to a network may be defined as the connection between a mobile node and its first-hop link-layer entity. Generally the first-hop link-layer entity, for example a base station is different from the first-hop network-layer entity, for example an access router. According to the implementation, the entity to which a mobile node attaches is different for each layer.

A performance of a network access entity within the meaning of this document may be defined as the ability of a network access entity to best serve a MN. This may depend on various parameters, like current load, distance to the MN, current number of MN registered at the MAP, etc..

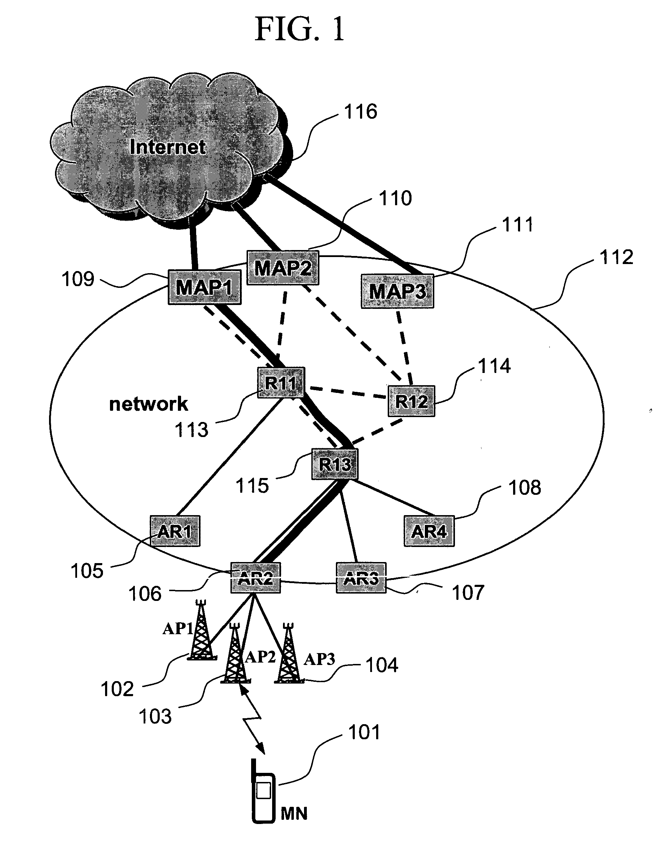

Fig. 1 shows a mobile communication system according to one embodiment of the invention. A mobile node 101 is located in a reception area of an Access Point (AP) AP2 103 and is further located in the vicinity of further APs, AP1 102 and AP3 104. It is however also possible to implement NodeBs instead of APs without restricting the embodiments of the invention.

The three APs, 102, 103, 104 are connected to an Access Router (AR) AR2 106. Further ARs are located within the network 112. Furthermore, a plurality of Mobility Anchor Points (MAP) are present in the network domain. These MAPs serve as entry points from an external network, like the Internet 116, and therefore may also be termed network access entities. Data packets may be routed through one of these MAPs destined to and from the MN. In other words, one MAP is selected to serve a MN, which then receives data from the Internet via the one MAP and transmits data packets to the Internet also via the one MAP. Only one MAP may serve a MN from its first registration in a domain, for example a NETLMM domain, to its leave. Usually, a handover for the MN between MAPs is not allowed.

The connections between ARs and MAPs are like in a meshed network, each AR may be connected to each MAP. In addition, each MN is registered at both, in one MAP and in one AR. Here, the case will be described in which the MN 101 is registered in AR2 106 and MAP1 109. It is further assumed that each MAP has an own prefix. The prefix may further be a subset of a NETLMM domain's prefix or a similarly pre-configured subset of a large domain.

A mobile node needs to configure its globally routable IP address at the beginning, for example upon attaching to the network. This may happen after a handover from an AR in another network to the AR2 106 in the new network 112. It is also usual, to conduct an IP address configuration for the MN, when the MN first powers on.

In case the MN handovers from another AR, the MN usually already possesses a link-local address for the previous communication with the network. Accordingly, the MN may keep its link-local address. In case the mobile node, is powered on, no link-local address is available in the mobile node, hence the MN has to first generate a suitable link-local address.
When a MN powers up, after initializing the communicating interface, a Layer 2 (L2) connection to the first hop radio device is established, which is normally a base station (NodeB) or an Access Point. The MN also generates a link-local (LL) address for this interface. If a handover is conducted for the MN, the LL address is already available and must not be generated. The LL address needs to be unique in the network, in which the MN is currently located. Hence, upon generating the link-local address, or in case the MN comes from another AR, upon attaching to the network, the mobile node must examine if its LL-address is unique within the network. Therefore, the MN sends a uniqueness request message out into the network, wherein said message includes the generated LL-address of the mobile node, whose uniqueness has to be verified.

The ARs within the network are provided with information about all MAPs in the network. A MAP list is included in every AR, comprising address information about every MAP. The stored address information of a MAP at least comprises the IP prefix of the MAP. In addition, the MAP table in the ARs includes performance information on every reachable MAP in the network. The performance of a MAP may be set or determined appropriately, according to the necessities of the MN. For example, the load of the MAP or data on the ability to serve new nodes may be utilized to determine a performance value. By determining the best MAP of all reachable MAPs for the MN it is possible that the most adequate MAP will be employed for the MN. The most preferable MAP is selected according to the performance information available in the list in the router 106. The AR with the performance value indicating the highest capability for serving a new MN is chosen from the list. There might be other conditions for choosing a MAP by the AR, which may be defined by a network operator.

Accordingly, the IP prefix address information, which is also stored with the selected MAP, is utilized to configure the global network-layer address of the mobile node. Thereby, the MN is assigned a globally routable IP address for communicating in and outside the current network.

The data packets to/from the MN are tunnelled between AR and MAP. In the usual case , it is possible to include further routers R11, R12, R13 between the ARs and the MAPs. The routers would then just appropriately route data encapsulated in the AR and the MAP.

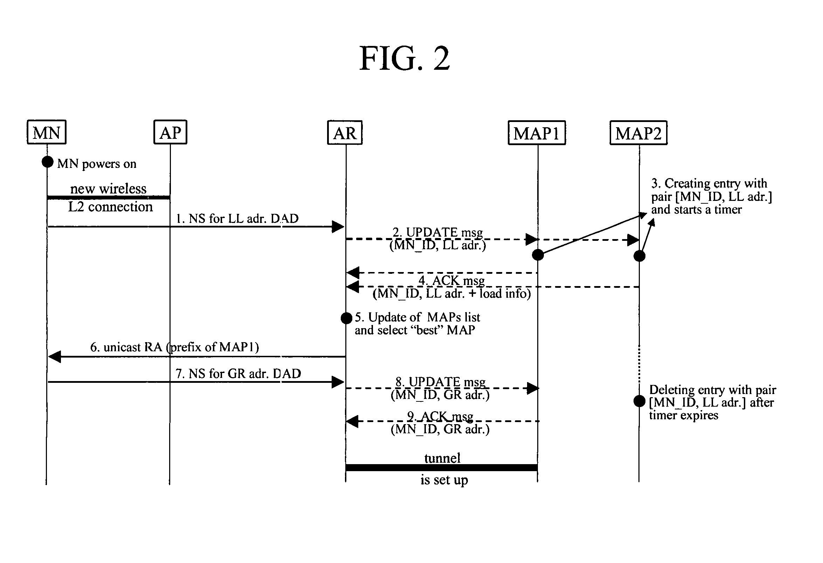

In the following, more detailed exemplary embodiments of the invention will be outlined utilizing corresponding IPv6 signalling procedures and messages to perform the invention. Fig. 2 shows a signalling diagram for configuring a globally routable address of a MN according to an exemplary embodiment of the invention.

Similar entities are shown compared to Fig. 1. A MN physically attaches to an AP, which could also be a base station (NodeB), via a Layer 2 wireless connection. An AR is further connected to only two reachable MAPs, MAP1 and MAP2.

Only the case where a MN powers on, will be further considered. However, a corresponding procedure is also applicable if a MN handovers from another network. When a MN powers up, the MN generates a link-local address for this interface. Each interface generates a link-local address, which is never routed off the local link.

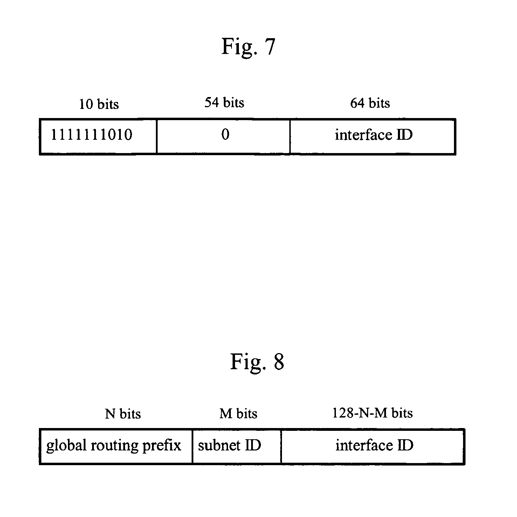

In Fig. 7 the format of a usual link-local address is illustrated. A unicast IP address is usually utilized for identifying an interface within a single link. Link-Local addresses are designed to be used for addressing on a single link for purposes such as automatic address configuration, neighbor discovery, or when no routers are present. Routers must not forward any packets with link-local source or destination addresses to other links. The first 64 bits of the link-local address, i.e. the prefix, are the same for all nodes on the same subnet (link). The interface ID is generated by each node. Whenever the node configures a link-local address for an interface, e. g. at power on, the node must check the uniqueness of this address on the link.

That address is then configured onto the network interface. At this stage, the address is considered tentative, and the host may join appropriate multicast groups. One of the multicast groups of the solicited-node is then used to check that the tentative address is unique, by using a Neighbor Solicitation (NS) message, which is part of a ICMPv6 DAD procedure. Since the LL address needs to be unique for the whole L2 broadcast domain, the MN must perform duplicate address detection (DAD) for the tentative address.

A DAD is a procedure within IPv6, that may be performed on all unicast addresses prior to assigning them to an interface, regardless of whether they are obtained through a stateless autoconfiguration, DHCPv6, or manual configuration.

In particular, Duplicate Address Detection sends Neighbor Solicitation messages with an unspecified source address targeting its own tentative address. Such messages may trigger nodes already using the address to respond with a multicast Neighbor Advertisement indicating that the address is in use.

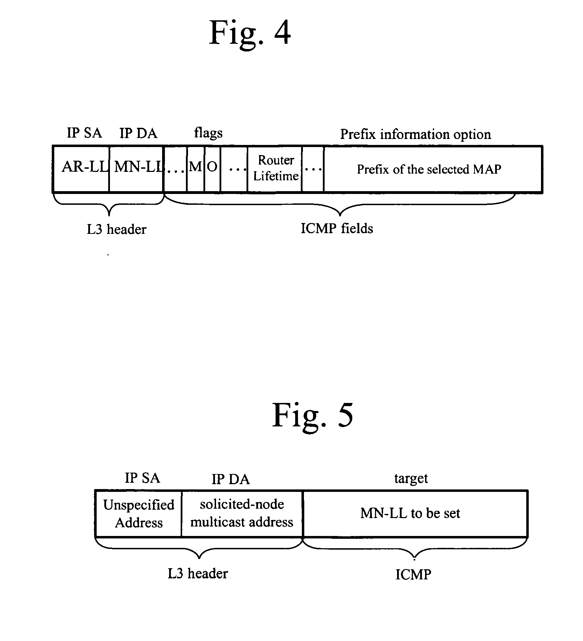

Fig. 5 shows a packet format of a corresponding Neighbor Solicitation Message. The IP source address of the L3 header is unspecified and the IP destination address of the L3 header is a multicast address of the solicited-node. Furthermore, the ICMP target address field includes the generated tentative LL-address of the MN.

If a node on the link is already using the desired address, if DAD is utilized, a duplicated address is detected, then the host that is already using the address replies with a Neighbor Advertisement, and the tentative address is abandoned, and autoconfiguration stops on that host. Furthermore, a new LL-address is generated in the MN and a DAD, according to the above described is initiated for the newly generated LL-address of the MN as well.

If there is no answer to the Neighbor Solicitation message within a certain time, then the address is unique, and the LL-address for the interface used by the MN transitions from tentative to preferred. Accordingly, the verified Link-Local address is then assigned to the MN's interface.

In addition, if the LL-address is unique, since the MNs are allowed to move between ARs and keep their LL-addresses, the router AR needs to further verify the MN's LL-address within the whole network. Therefore the AR sends an update message to all MAPs, comprising identification information of the MN, like the MN's ID and the LL-address of the MN, which is to be verified. In this case the update message is transmitted to MAP1 and MAP2.

The MAPs respectively check if the requested LL address is unique in their databases. If the MN is new for the MAP, the MAP registers a new entry in the database including the identification parameter of the MN, the LL-address and the AR having sent the update message. Furthermore, the MAP initiates an existence timer for the configured entry of the MN. The timer is provided in order to delete this entry, if the MAP does not receive a request for registration of a globally routable IP address for the MN within a certain time. Said lifetime sequence value should be large enough to avoid deletion of the entry, before an update message for the same mobile node's globally routable IP address may arrive.

In addition, the MAPs generate and transmit an acknowledgment message to the router AR, which transmitted the update message. Each uniqueness acknowledgment message states that the LL-address is unique in the respective MAP. Additionally, performance information on the MAP is included in each respective ACK message. As mentioned above, this may for example be the current load of the MAP, or the current capability to serve new nodes.

If the LL-address is determined to be not unique in a MAP, the MAP transmits a uniqueness denial message, for example Not Acknowledgement notification, to the AR (not shown). In this case, no entry is configured for the MN, because the LL-address of the MN is already being utilized by another host. Accordingly, no timing sequence is started for the MN. It is however also possible, to append current performance information of the MAP to the NACK message.

Subsequently, the ACK messages or NACK messages are received in the AR. The messages are appropriately processed and in consequence the MAP's list in the router is updated utilizing the received information in the ACK/NACK messages from the MAPs.

In case the LL-address was determined as not being unique in one MAP of the network, namely the router receives at least one uniqueness denial message from the MAPs, the AR generates and sends a Neighbor Advertisement message to the MN, in order to inform the MN that the LL-address is not unique and that the MN should generate a new Link-Local address.

In case the LL-address was determined as being unique in every MAP of the domain, namely the router receives only uniqueness verification messages from the MAPs, the AR selects from the MAP list the MAP with the highest performance value of all MAPs in the list. In this case the MAP1 is chosen. Subsequently, the AR sends an IP address configuration message, which may be a unicast Router Advertisement (RA) message in the IPv6 implementation, to the MN having initiated the LL DAD process, without waiting to receive a RS. Thereby, the AR advertises the IP prefix of the most preferable MAP.

Fig. 4 shows a packet format of a Router Advertisement message, that is used according to the invention. In the Layer 3 header of the RA message the Link-Local address of the AR is utilized as the IP source address and the Link-Local address of the MN is used as the IP destination address of the RA message. Furthermore, within the ICMP field of the RA message the Prefix address information of the selected best MAP is inserted into the prefix information option.

For the purposes of registering the MN in only one MAP and configuring only one IP address for the mobile node, the RA messages are configured in the following way. The unsolicited multicast RA includes no prefix option, so that it is solely used by MNs to update their default router. The solicited unicast RA includes always the prefix option and is sent unicast to a MN having requested it in order to configure/update its IP address. The solicited RA includes only the prefix of the MAP, which will serve or already serves the MN. Thereby, it is possible to advertise only the prefix (or prefixes, if multiple prefixes are owned by the MAP) of the MAP to the MN. Unsolicited multicast RA sent from the AR are not usable for IP address configuration, as they do not contain the prefix address. The MN only configures one IP address for its one serving MAP.

The "M" flag (managed address configuration flag) in the RAs may be set to "0", meaning that stateless address autoconfiguration has to be used by the MN to configure its global IP address. The "A" flag (autonomous address-configuration flag) must be set, in order to indicate that the included prefix can be used for autonomous address configuration by the MN. Further, it is assumed that the "L" flag (on-link flag) should be set to "0". If the "L" is set to "0", the MN transmits all packets to the AR, independent if the destination address is on-link or off-link. If "L" flag is set to "1", then the MN would transmit packets, having the same prefix as the MN's one directly to the destination and not to the AR.

As mentioned above, the AR sends a solicited unicast RA message to the MN, including the prefix of the selected best MAP. The MN receives the RA message and configures a globally routable IP address, consisting of the prefix of the selected MAP and of the interface address utilized by the mobile node.

Fig. 8 shows a general format of a global unicast IP address. The global routing prefix is a typically hierarchically-structured value, assigned to a site, which is a cluster of subnets (links). The subnet ID is an identifier of a link within the site, and the interface ID is the identifier of the interface. All global unicast addresses other than those that start with binary 000, may have a 64-bit interface ID field, i.e., n + m = 64, constructed in Modified EUI-64 format. Whenever the node configures a global unicast IP address for an interface, e. g. at power on, the node must check the uniqueness of this address on the link.

Accordingly, a uniqueness test has to be conducted for the configured global IP address of the MN. This may be performed by a DAD procedure, similar to the DAD procedure for the generated LL-address of the MN.

Consequently, a NS message is transmitted to the router, comprising the IP address whose uniqueness is to be verified. Similar to the above describes method if the AR determines that the IP address is unique, the AR transmits an update message only to the selected MAP in the network, in this case MAP1. On the other hand, if the IP address is identified as not being unique a NA message is sent to the MN, thereby indicating that the configured IP address is already in use by another entity and that a new IP configuration procedure should be initiated.

The update message, sent in case the IP address is unique in the AR, contains an identification parameter of the MN and the IP address of the MN to be controlled. When the MAP1 receives the update message, it first checks if the globally routable IP address is unique within its databases.

If it is not unique in the MAP1, then a uniqueness denial message is generated for the AR for the IP address of the MN and is sent to the AR.

If it is unique, the MAP terminates the lifetimer started at the LL address DAD procedure. Furthermore, the MAP adds the MN's IP address to the already existing entry of the MN in the registration database and sends a uniqueness acknowledgment message to the AR.

The final steps depend on the received message in the AR. If a uniqueness denial message is received in the AR, then the AR generates a NA message for the mobile node, so as to indicate to the MN that the IP address is already utilized by another host. Consequently, a new IP configuration procedure may be started for the MN.

If the AR receives a uniqueness acknowledgement message, a tunnel is set up between the AR and the chosen MAP1.

Furthermore, the other MAPs in the network, which still have an entry for the MN are waiting for an update message for a global unicast IP address of the MN. Eventually, the timer initiated for this entry lapses and consequently, said entry for the MN is deleted. Hence, the MN is only registered in one MAP, here MAP1 within the network.

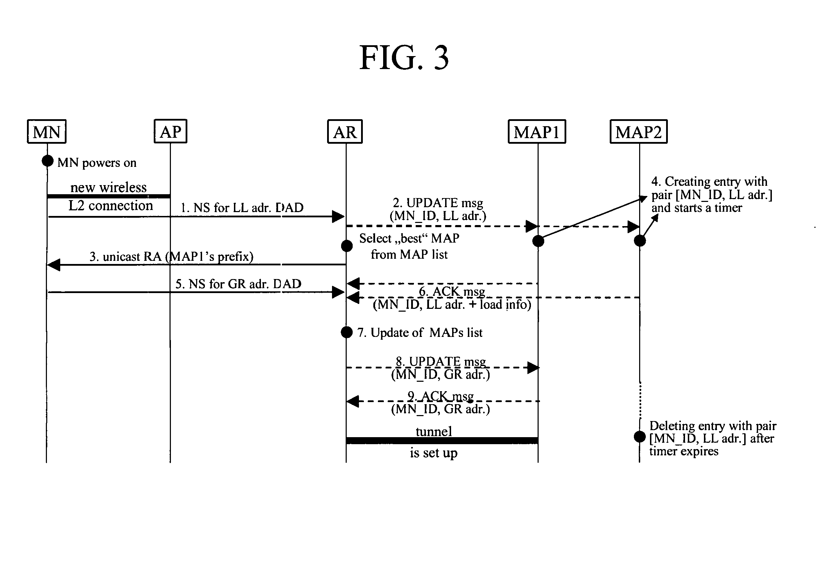

Fig. 3 shows a signalling diagram for configuring a global IP address of the MN according to another embodiment of the invention. According to this further embodiment, the point of time, at which the AR selects the most preferable MAP from its internal MAP list, is earlier. Instead of waiting until the MAP list is updated, the selection is conducted upon receiving the uniqueness request message for the LL-address from the MN.

This embodiment will be only briefly explained, as great parts of the embodiment coincide with the previous embodiment, illustrated in Fig. 2. Similar to the previous embodiment, a new wireless Layer 2 connection is established for a MN, upon powering on the MN. Accordingly, as a first step of the IP configuration of the MN a LL-address is generated and a DAD procedure is initiated for the just generated LL-address. Consequently, a NS message is generated and transmitted into the network for examining the uniqueness of the LL-address. Said message is received in the AR, and the AR then examines if the LL-address of the MN is unique in the AR.

If the LL-address is not unique, the AR transmits a NA message to the MN, thereby indicating that the generated link-local address may not be further used for the IP address configuration. The MN would then have to generate a new LL-address.

On the contrary, if the LL-address is unique, the AR transmits an update message to all reachable MAPs in the network. Furthermore, the AR immediately chooses the most suitable MAP from its own MAP list, according to the performance values of all MAPs. Upon choosing the best MAP, the AR generates and sends an IP configuration message (solicited unicast RA message) to the MN, thereby advertising the IP prefix of the selected MAP. The MN, upon receiving the prefix address information, is able to configure its own globally routable IP address, and afterwards, if no denial message for the LL-address from the router was received starts a uniqueness verification procedure, like for example DAD for the configured IP address.

Similar to the previous embodiment, in all MAPs an entry is configured for the update message, containing the LL-address and a lifetime sequence is started for it. Accordingly, the uniqueness of the LL-address has to be examined and according to the examination, either a verification or a denial message is sent back to the AR, that transmitted the update message. Either way, the verification and denial messages further contain information about the condition of the MAP. The performance condition of the MAP may be considered by determining the load and further appropriate parameters.

In case that a denial message for the LL-address is received in the AR, the AR may transmit a denial message to the MN, thereby notifying the MN that the LL-address should not be used for further IP address configuration. Consequently, the MN aborts the currently ongoing IP address configuration and starts again by generating a new LL-address and performing a DAD procedure for the newly generated LL-address. Accordingly, if no NS message is yet sent for the DAD procedure of the configured global IP address, as the IP address configuration is aborted, the MN does not proceed with the IP address configuration by sending a NS message for the IP address.

A similar procedure to the above described, applies to the DAD for the global IP address. The IP address is first verified in the AR, and in case it is determined to be unique in it, the AR transmits an update message, to review if the IP address is also unique in the selected MAP1. After checking in the MAP1 whether the globally routable IP address is unique, the MAP1 transmits either a NACK or an ACK message back to the AR. In case the AR receives an verification message, a tunnel is finally set up between the AR and the selected MAP1.

In the embodiment illustrated in Fig. 2, the AR sends a RA message to the MN after it receives acknowledgement by all MAPs about the LL address query by the update message. In this way the AR advertises the prefix of the most appropriate MAP.

In the embodiment illustrated in Fig. 3, the AR sends the RA message immediately after reception of a NS message for LL-address DAD procedure from the MN. An advantage of this alternative may be that the process of MN's global IP address configuration starts without waiting the AR to perform LL address DAD with all MAPs in the network. As a result, faster IP address configuration is achieved. However, the AR advertises the IP prefix of the MAP, which has been recently the most preferable, but it may not be the best one, since the AR does not wait for the MAP's reply about LL address DAD.

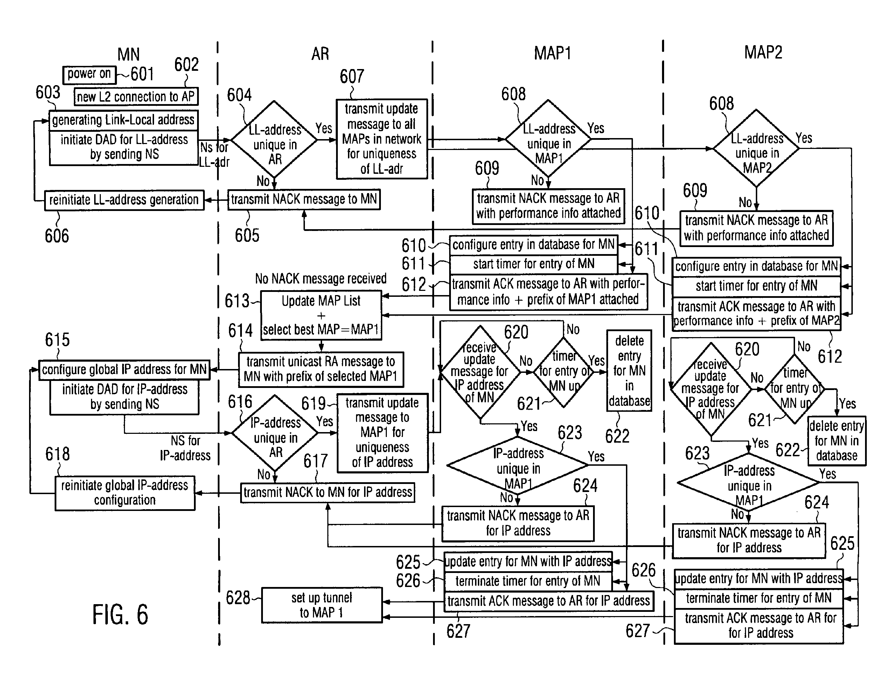

Fig. 6 shows a logical flow chart according to one embodiment of the invention, in which the global IP address of a mobile node is configured after a switch on of the MN.

The MN at the beginning powers on 601. Nevertheless, the subsequently described method may apply to a MN that handoffs from another network and has to proof the uniqueness of its link-local IP address and to configure a new global unicast IP address. Subsequently, a new layer 2 connection to an AP or NodeB is established 602. Then, a Link-Local address is generated for communicating with the network via the established link to the network.

In order to utilize the LL-address it is necessary to verify that the LL-address is unique within the current network, so that flawless routing is possible. Therefore, a Duplicate Address Detection (DAD) is initiated for the LL-address. As a first step of the DAD procedure, a Neighbour Solicitation (NS) message is transmitted to the AR.

Upon receiving in the AR the NS message from the MN, including the LL-address of the MN, the AR examines 604 whether the LL-address is unique within the databases of the AR.

If the LL-address is identified in the databases, hence the LL-address is not unique, then the AR sends 605 a Not Acknowledgement (NACK) message to the MN, so as to indicate that this address is not suitable for further IP address configuration. Consequently, the MN reinitiates 606 the LL-address generation, thereby starting again from step 603.

In case the LL-address is unique within the AR, the AR transmits 607 an update message to all MAPs in the network, for examining the uniqueness of the LL-address. Accordingly, upon reception in the MAPs, it is examined 608 whether the LL-address of the MN is unique within the databases of the MAPs. In case an entry is found already containing said LL-address, a NACK message is transmitted 609 to the AR. Advantageously, this message may further contain performance information, like current load or availability of the MAP. If the AR receives one message from a MAP, it forwards 605 an appropriate NACK message to the MN and hence a new LL-address is generated in the MN.

If the LL-address is not found in the databases of the MAP, at first a new entry is configured 610 for this MN, including the MN's ID, LL-address and the AR from which the update message was transmitted. Additionally, a life timer is started 611 for the just configured entry and an ACK message is transmitted 612 to the AR, from where the update message arrived. The ACK message may contain prefix address information and performance information on the MAP.

In the AR, the ACK messages are received and the MAP list is updated 613 according to the received performance information.

If the AR does not receive any NACK message from all the MAPs in the network, the uniqueness within the whole network of the LL-address is verified. Subsequently, the best MAP from the MAP list is selected 613, which presumably is MAP1. Upon selecting the most capable MAP, a unicast RA message is transmitted 614 to the MN, thereby advertising the prefix address of the selected MAP.

The MN receives the RA message with the prefix option and configures for itself 615 a global IP address, thereby utilizing the received prefix of MAP1. Additionally, as a uniqueness verification procedure, a DAD is initiated 615 for the global IP address, thereby sending a NS message to the AR.

The AR, upon receiving the NS message checks 616 in its databases if the IP address is unique. In case the IP address is already in use, a NACK message for the IP address is transmitted 617 to the MN. Accordingly, as soon as the MN receives the NACK message it reinitiates 618 the global IP address configuration.

If the IP address is unique in the AR, the AR transmits 619 an update message to the previously selected MAP1, in order to verify the uniqueness of the IP address. The update message is received 620 in MAP1, and subsequently the MAP1 verifies 623 if the IP address is unique. In case the IP address is already utilized by another entity, the MAP1 transmits 624 a NACK message to the AR, which then also transmits 617 a NACK message to the MN, for configuring a new and unique global IP address.

In case the MAP1 verifies the uniqueness of the IP address, at first the entry for the MN in the database is updated 625 with the global IP address. Furthermore, the timer started for this entry is terminated 626 and an ACK message is sent 627 to the AR for the IP address.

The update message in step 619 was only sent to the MAP1. Consequently, the MAP2 does not receive an update message including the IP address of the MN. Therefore, eventually the timer 621 for the MN's database entry lapses and the entry is deleted 622. Therefore, the MN remains only registered at the MAP1.

Finally, a tunnel may be set up 628 between the AR and the selected best MAP1.

Theoretically, the method according to this invention may not have any benefit, if the MN sends a Router Solicitation message before transmitting the NS message for the LL-address DAD procedure. However, such behaviour may only happen in case of hand-off to a new subnet (link), but this is not the case in an initial IP configuration. Therefore, the benefit of the method is the reduced time for initial IP configuration in the MN, because the AR generates a unicast solicited RA to the MN, which is triggered by the NS for LL DAD. Thereby, the AR does not wait until the reception of a RS from the MN.

In a standard IP network, some time after the configuration of LL IP address, the MN may receive an unsolicited RA message containing prefix information option, e.g. multicasted from an AR. The MN then deploys the prefix information in it to configure global unicast IP address, and consequently performs DAD for the global unicast IP address. In the introduced scenario of NETLMM network with multiple MAPs according to the invention, the AR does not send prefix information option in the unsolicited multicast RA. Therefore, when the MN receives unsolicited RA, it cannot configure a global unicast address, because of the missing prefix address. A standard MN would wait for some time before sending a RS message for acquisition of prefix information from the available access routers.

That means, the IP address configuration in the assumed scenario will take a considerable time. Therefore, the transmission of a unicast RA message, triggered by NS for LL-address DAD, considerably reduces the initial IP configuration time.

One further benefit of the present invention is that the AR self maintains a MAPs status list. Therefore the AR may generate a unicast RA immediately after receiving a NS for link-local address DAD, because there is no need to consult a central server for the selection of MAP.

Furthermore, an elimination of the extra signalling for MAP discovery is achieved, which would occur if the AR additionally has to poll the MAPs for their condition, like load and availability. This elimination is possible due to the extension to the ACK message sent by the MAP to AR during the LL address DAD signalling, in which the MAP's load condition is included.

Further, the invention mainly relies on stateless address autoconfiguration, whereas the most preferable MAP is calculated at the ARs. Therefore, there is not need of central server, like a Network Manager or a DHCP server, and the operational costs for the network operator can thereby be decreased.

A further benefit of the disclosed method may be that no changes to standard IPv6 in the MN implementation are necessary. The changes are needed only on the network side and this allows to serve standard unmodified terminals. Further, no additional signalling over the air interface, which is the bottleneck of the end-to-end communication, is performed.

Another embodiment of the invention relates to the implementation of the above described various embodiments using hardware and software. It is recognized that the various embodiments of the invention above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the present invention may also be implemented by means of software modules which are executed by a processor or directly in hardware. Also a combination of software modules and a hardware implementation may be possible. The software modules or instructions may be stored on any kind of computer readable storage media, for example RAM, EPROM, EEPROM, flash memory, registers, hard disks, CD-ROM, DVD, etc.

## Claims

1. A method for configuring a global network-layer address of a mobile node (101), wherein the mobile node attaches to a network (112) and utilizes a link-local address for communicating with the network, the mobile node is connected to a router (106) in the network, the router is connected to a plurality of network access entities (109, 110, 111) and includes a network access entity list, comprising prefix address information and performance information on each of the plurality of network access entities, and the method comprises the steps of:
upon the attachment to the network, transmitting (603) from the mobile node a first uniqueness request notification into the network, for examining the uniqueness within the network of the link-local address of the mobile node,
after receiving the first uniqueness request notification in the router, selecting (613) one network access entity from the network access entity list, the performance information of the selected network access entity indicating the highest performance of all the network access entities of the network access entity list, and
configuring (615) the global network-layer address of the mobile node, by utilizing the prefix address information of the selected network access router.

2. The method of claim 1, further comprising the steps of:
upon receiving the first uniqueness request notification in the router, examining (604) in the router the uniqueness of the link-local address,
in case the link-local address is unique in the router, transmitting (607) a second uniqueness request notification from the router to each of the plurality of network access entities, comprising identification information of the mobile node and the link-local address of the mobile node, and
in case the link-local address is not unique in the router, transmitting (605) a first uniqueness denial notification to the mobile node, comprising uniqueness information on the examined link-local address of the mobile node, upon receiving the uniqueness denial notification from the router, generating a second link-local address for the mobile node.

3. The method of one of claims 1-2, further comprising the steps of:
upon receiving the second uniqueness request notification in each network access entity, examining (608) in each network access entity the uniqueness of the link-local address of the mobile node, and
in case the link-local address of the mobile node is unique in each network access entity, transmitting (612) from each network access entity a first uniqueness statement notification to the router, comprising uniqueness information of the examined link-local address of the mobile node and comprising prefix address information and performance information of the transmitting network access entity, updating (610) a registration database of mobile nodes in each network access entity, by configuring an entry for the mobile node in the registration database of mobile nodes, utilizing the identification information and link-local address of the mobile node in the second uniqueness request notification, and
in case the link-local address of the mobile node is not unique in each network access entity, transmitting (609) from each network access entity a second uniqueness denial notification to the router, comprising uniqueness information on the examined link-local address of the mobile node and performance information of the transmitting network access entity.

4. The method of claim 3, further comprising the step of:
upon updating the registration database of mobile nodes, initiating (611) in each network access entity a lifetime sequence for the entry for the mobile node in the registration database.

5. The method of one of claims 3-4, further comprising the step of:
upon receiving in the router the first uniqueness statement notification from each network access entity, updating (613) the network access entity list, utilizing the prefix address information and performance information of the first uniqueness statement notification from each network access entity.

6. The method of one of claims 1-5, wherein the selection of the one network access entity from the network access entity list is performed upon receiving the first uniqueness request notification in the router.

7. The method of one of claims 1-5, wherein the selection of the one network access entity from the network access entity list is performed upon updating the network access entity list.

8. The method of one of claims 6-7, further comprising the steps of:
upon selecting the one network access entity, transmitting (614) a global network-layer address configuration message to the mobile node, comprising prefix address information of the selected network access entity, and
wherein the configuration of the global network-layer address of the mobile node is conducted upon receiving the global network-layer address configuration message.

9. The method of claim 8, wherein the global network-layer address configuration message is a unicast router advertisement message.

10. The method of one of claims 1-9, further comprising the step of:
upon configuring the global network-layer address, transmitting (615) a third uniqueness request notification into the network, for examining the uniqueness within the network of the configured global network-layer address of the mobile node.

11. The method of one of claims 1-10, wherein the first uniqueness request notification is a Neighbour Solicitation message being sent upon initiating a duplicate address detection procedure for the link-local address of the mobile node.

12. The method of one of claims 1-11, wherein the third uniqueness request notification is a Neighbour Solicitation message being sent upon initiating a duplicate address detection procedure for the global network-layer address of the mobile node.

13. The method of claim 12, further comprising the step of:
upon receiving the third uniqueness request notification in the router, examining (616) in the router the uniqueness of the global network-layer address,
in case the global network-layer address is unique in the router, transmitting (619) a fourth uniqueness request notification from the router to the selected network access entity, comprising identification information of the mobile node and the global network-layer address of the mobile node, and
in case the global network-layer address is not unique in the router, transmitting (617) a third uniqueness denial notification to the mobile node, comprising uniqueness information on the examined global network-layer address of the mobile node, upon receiving the third uniqueness denial notification from the router, configuring (615) a second global network-layer address for the mobile node.

14. The method of claim 13, further comprising the step of:
upon receiving the fourth uniqueness request notification in the selected network access entity, examining (620) in the selected network access entity the uniqueness of the global network-layer address of the mobile node,
in case the global network-layer address of the mobile node is unique in the selected network access entity, terminating (626) the lifetime sequence for the entry for the mobile node in the registration database for mobile nodes, updating (625) the entry for the mobile node in the registration database for mobile nodes, utilizing the identification information and the global network-layer address of the mobile node, and transmitting (627) from the selected network access entity a second uniqueness statement notification to the router, comprising uniqueness information of the examined global network-layer address of the mobile node, and
in case the global network-layer address of the mobile node is not unique in the selected network access entity, transmitting (624) from the selected network access entity a fourth uniqueness denial notification to the router, comprising uniqueness information of the examined global network-layer address of the mobile node.

15. The method of one of claims 1-14, wherein the performance information of each network access entity is an indicator for the ability of a network access entity to serve a mobile node, comprising information on a load and a mobile node serving capability of the network access entity.

16. A router (106) for exchanging data with a mobile (101) node within a network (112), wherein the mobile node attaches to the network and utilizes a link-local address for communicating with the network, the router being connected to a plurality of network access entities (109, 110, 111), wherein the router comprises:
a network access entity list, comprising prefix address information and performance information on each of the plurality of network access entities,
a receiver adapted to receive a uniqueness statement message from each network access entity, comprising uniqueness information of the link-local address of the mobile node and comprising prefix address information and performance information of the transmitting network access entity,
a processor adapted to process the uniqueness statement message, and further adapted to update the network access entity list, utilizing the prefix address information and performance information of the uniqueness statement notification from each network access entity.

17. The router of claim 16, wherein the receiver is further adapted to receive a uniqueness request notification from the mobile node, for examining the uniqueness of the link-local address of the mobile node,
the processor is further adapted to select, in response to the uniqueness request notification one network access entity from the network access entity list, the performance information of the selected network access entity indicating the highest performance of all the network access entities of the network access entity list, and further adapted to generate a global network-layer address configuration message for the mobile node, comprising prefix address information of the one selected network access entity, and the router further comprising:
a transmitter adapted to transmit the global network-layer address configuration message to the mobile node.

18. The router of one of claims 16-17, wherein the receiver is further adapted to receive a second uniqueness request notification from the mobile node, for examining the uniqueness of the configured global network-layer address of the mobile node,
the processor is further adapted to examine in the router the uniqueness of the global network-layer address of the mobile node, and
in case the global network-layer address is not unique, the processor is further adapted to generate a uniqueness denial message for the mobile node, and the transmitter is further adapted to transmit the uniqueness denial message to the mobile node.

19. A network access entity (109, 110, 111) for routing data into a network (112), the network access entity being connected to a router(106), wherein the mobile node attaches to the network and utilizes a link-local address for communicating with the network, the router is connected to the mobile node, and the network access entity comprises:
a receiver adapted to receive a first uniqueness request notification from the router, comprising identification information of the mobile node and the link-local address of the mobile node,
a processor is further adapted to process the uniqueness request notification and adapted to examine in the network access entity the uniqueness of the link-local address of the mobile node, and adapted to generate a uniqueness statement notification for the router, comprising uniqueness information of the examined link-local address of the mobile node and comprising prefix address information and performance information of the network access entity, and
a transmitter adapted to transmit the uniqueness statement notification to the router.

20. The network access entity of claim 19, wherein the processor is further adapted to update a registration database of mobile nodes in the network access entity, by configuring an entry for the mobile node in the registration database of mobile nodes, utilizing the identification information and link-local address of the mobile node in the received uniqueness request notification, and further adapted to initiate a lifetime sequence for the entry for the mobile node in the registration database.

21. The network access entity of claim 20, wherein a global network-layer address is configured for the mobile node, utilizing the prefix address information of the network access entity,
the receiver is further adapted to receive a second uniqueness request notification from the router, comprising identification information of the mobile node and the global network-layer address of the mobile node, wherein
the processor is further adapted to process the second uniqueness request notification from the router, and adapted to examine in the network access entity the uniqueness of the global network-layer address of the mobile node,
in case the global network-layer address is unique in the network access entity, the processor is further adapted to terminate the lifetime sequence for the entry for the mobile node in the registration database for mobile nodes, further adapted to update the entry for the mobile node in the registration database for mobile nodes, utilizing the identification information and the global network-layer address of the mobile node, and adapted to generate a second uniqueness statement notification to the router, comprising uniqueness information of the examined global network-layer address of the mobile node,
in case the global network-layer address is not unique in the network access entity, the transmitter is adapted to transmit a uniqueness denial notification to the router, comprising uniqueness information of the examined global network-layer address of the mobile node.

22. A system for configuring a global network-layer address of a mobile node, comprising at least a router according to one of claims 16-18 and a network access entity according to one of claims 19-21.

23. The system of claim 22, wherein the network access entity and the router are adapted to perform the steps of the method according to one of the claims 2 to 15.
